# EUROPÄISCHE PATENTSCHRIFT

(11) **EP 1 346 247 B1**
(45) Veröffentlichungstag und Bekanntmachung des Hinweises auf die Patenterteilung: **23.06.2004**
(21) Anmeldenummer: 01271984.5
(22) Anmeldetag: 20.11.2001
(51) Int. Cl.: G03H 1/04

(54) **Optisches System zum Belichten eines Hologrammfilms**
Optical system for holographic film exposure
Système optique pour l'exposition d'un film holographique

(30) Priorität: 22.12.2000 DE 10064233
(43) Veröffentlichungstag der Anmeldung: 24.09.2003
(73) Patentinhaber: Xetos AG, 82064 Strasslach (DE)
(72) Erfinder: DE JONGH, Rudi, 83026 Rosenheim (DE); FRÖMEL, Martin, 82343 Maising (DE); ÖXLE, Nicolas, 83026 Rosenheim (DE); KNOCKE, Frank, 85560 Ebersberg (DE)
(74) Vertreter: Jacoby, Georg
(86) Internationale Anmeldenummer: PCT/EP2001/013446
(87) Internationale Veröffentlichungsnummer: WO 2002/052354

(56) Entgegenhaltungen:
- EP-A- 0 117 606
- BE-A- 497 181
- DE-A- 2 201 574
- DE-A- 4 423 802
- GB-A- 2 282 700
- US-A- 4 698 730
- US-A- 4 770 514
- US-A- 5 042 928
- US-A- 5 173 810
- US-A- 5 317 435
- US-A- 5 813 743
- SPIGULIS J: "COMPACT DIELECTRIC REFLECTIVE ELEMENTS I. HALF-SPHERE CONCENTRATORS OF RADIALLY EMITTED LIGHT" APPLIED OPTICS, OPTICAL SOCIETY OF AMERICA,WASHINGTON, US, Bd. 33, Nr. 25, 1. September 1994 (1994-09-01), Seiten 5970-5974, XP000473282 ISSN: 0003-6935
- PATENT ABSTRACTS OF JAPAN vol. 010, no. 343 (E-456), 19. November 1986 (1986-11-19) & JP 61 147585 A (STANLEY ELECTRIC CO LTD), 5. Juli 1986 (1986-07-05)
- PATENT ABSTRACTS OF JAPAN vol. 012, no. 246 (E-632), 12. Juli 1988 (1988-07-12) & JP 63 033879 A (MITSUBISHI CABLE IND LTD), 13. Februar 1988 (1988-02-13) in der Anmeldung erwähnt

## Beschreibung

Die Erfindung betrifft ein optisches System zum Belichten eines Hologrammfilms gemäß dem Oberbegriff des Anspruchs 1.

Insbesondere bei der computergesteuerten Belichtung von holographischen Filmen nach dem sogenannten "Dot-Matrix"-Prinzip ist es erforderlich, daß Einzelstrahlen des Objektstrahls unter bestimmten einstellbaren Einfallswinkeln auf den zu belichtenden Film gelenkt werden. Heutzutage wird dies dadurch realisiert, daß ein aufgeweiterter Laserstrahl über eine Positivlinse auf den zu belichtenden Film fällt. Vor der Positivlinse ist eine computergesteuerte LCD-Fläche lateral in dem aufgeweiteten Lichtstrahl angeordnet, mit der durch Steuerung der Transmission der einzelnen Pixel einzelne Strahlen durchgelassen oder ausgeblendet werden können. Im Zusammenspiel mit der Positivlinse entspricht jeder Ort auf der LCD-Fläche einem bestimmten Einfallswinkel. Bei dieser bekannten Anordnung kann jeder Winkel zwischen 0° (Zentralstrahl) und dem halben Öffnungswinkel der Linse (Randstrahl) realisiert werden. Damit das Hologramm einen möglichst großen Informationsgehalt erlangt, sollte der Öffnungswinkel so groß wie möglich sein. Für kommerziell erhältliche Positivlinsen liegen die maximalen Öffnungswinkel bei etwa 80°. Hierzu sei jedoch angemerkt, daß bei größerer Apertur auch die Linsenfehler zunehmen. Zudem wird durch die Brechung des durch die Positivlinse hindurch fallenden Lichtstrahls die Polarisationsebene des einfallenden Lichtes gedreht, und zwar umso stärker, je größer der Einfallswinkel des Strahles an der ersten Linsenfläche ist, also je stärker die Linsenoberfläche an der betreffenden Stelle gekrümmt ist. Eine Polarisationsdrehung ist aber bei der holographischen Aufnahme unerwünscht, da im ungünstigsten Fall eine Polarisationsdrehung von 90° bezüglich des Referenzstrahls, der ebenfalls auf den zu belichtenden Film auftrifft, zu einer Auslöschung führen würde. Insofern lassen sich mit den bekannten optischen Systemen aus dem Stand der Technik die holographischen Filme nach dem genannten Verfahren nur unzureichend belichten.

Aus der Druckschrift JP 63033879 AA ist ein optisches System bekannt, bei welchem eine Leuchtdiode im Brennpunkt eines Parabolspiegelstumpfes angeordnet ist, welcher die von der Leuchtdiode seitlich ausgestrahlten Lichtstrahlen parallel in Leuchtrichtung reflektiert. Ferner ist ein konvexes Linsensystem so innerhalb des Parabolspiegelstumpfes angeordnet, daß die von der Leuchtdiode ausgehenden Lichtstrahlen mit kleinerem Öffnungswinkel ebenfalls in parallele Lichtstrahlen umgewandelt werden. Über weitere Anwendungen dieses optischen Systems schweigt die Druckschrift. Insbesondere fehlt bei dem gezeigten System eine Eintrittsöffnung, durch die von außen eintreffendes Licht in den parallelen Lichtstrahl umgewandelt werden kann.

Aus den Druckschriften JP 56119111 AA, JP 61102505 AA, JP 9304772 AA und DE 69309820 T2 sind ähnliche Reflektoren bekannt. All diesen Reflektoren ist jedoch gemein, daß sie keine zweite Öffnung für den Eintritt oder Austritt des in einen Halbraum sich ausbreitenden Lichtstrahl zeigen.

Die Druckschrift DE 199 04 899 A1 zeigt einen Intensiv-Oberflächenbeleuchter für Videoprüfanlagen, bei dem das Licht mehrerer ringförmig um ein Objektiv angeordneter Lichtquellen über einen Parabolreflektor seitlich auf ein in den Brennpunkt des Parabolreflektors einführbares Objekt fällt. Durch Auswahl bestimmter Lichtelemente läßt sich somit der Einfallwinkel des Lichtes auf das Objekt steuern. Durch die Anordnung des Objektivs im Zentrum der Lichtstrahlen läßt sich das Objekt jedoch nicht mit direktem Auflicht bestrahlen.

Die gattungsbildende Druckschrift US 5,317,435 zeigt ein optisches System zum Belichten eines Hologrammfilms mit einer LCD-Fläche und einer Linse.

Die DE 2 201 574 A offenbart ein optisches System mit einer parabolförmigen reflektierenden Oberfläche und einer Sammellinse. Das optische System wird in Form einer Signalleuchte verwendet.

Der Erfindung liegt nunmehr die Aufgabe zugrunde, ein optisches System zum Belichten eines Hologrammfilms bereitzustellen, bei dem der Hologrammfilm mit einem großen Belichtungswinkel belichtet werden kann.

Die Erfindung löst diese Aufgabe mit dem Gegenstand des Anspruchs 1. Bevorzugte Ausführungsbeispiele der Erfindung sind in den Unteransprüchen beschrieben.

Vorteilhaft lassen sich mit diesem optischen System alle aus dem Halbraum unterhalb der ersten Öffnung in diese Öffnung einfallenden Lichtstrahlen in einen aus der zweiten Öffnung austretenden Parallelstrahl umwandeln und umgekehrt. Dies entspricht beispielsweise einem Froschauge mit einer Raumwinkelöffnung von 2π.

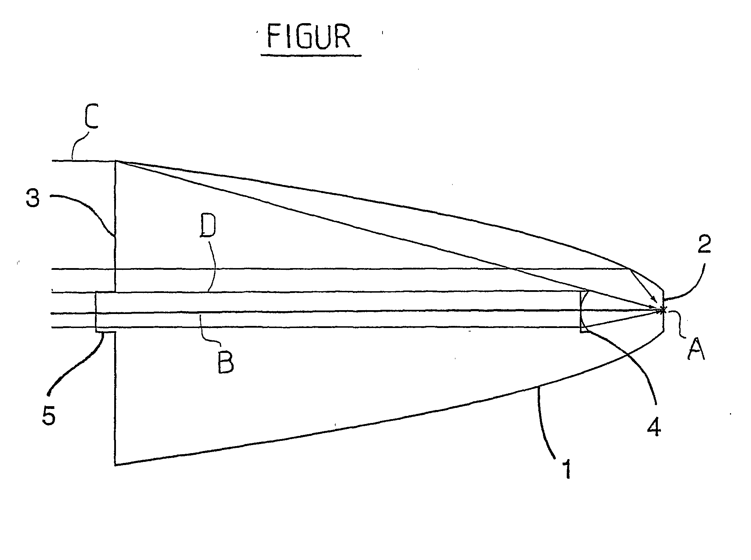

Nachfolgend werden die Erfindung sowie weitere Vorteile und Merkmale der Erfindung anhand bevorzugter Ausführungsbeispiele mit Bezug auf die beigefügte Zeichnung näher erläutert. In der Zeichnung zeigt die einzige Figur eine schematische Querschnittansicht eines optischen Systems gemäß einem bevorzugten Ausführungsbeispiel der Erfindung.

Das optische System umfaßt einen im wesentlichen massiven Parabolspiegel 1, dessen parabolförmige Außenfläche aus einem Acrylglasblock gedreht ist. Die parabolförmige Außenfläche wird anschließend von außen verspiegelt, so daß der Parabolspiegel 1 eine nach innen reflektierende Außenfläche aufweist. Selbstverständlich kann die parabolförmige Oberfläche auch aus einem Vollstück eines beliebigen Materials von innen ausgefräst oder sonstwie gefertigt werden, wobei in diesem Fall die Innenfläche von Innen verspiegelt wird. Im einfachsten Fall kann der Parabolspiegel 1 auch aus einem Metall mit hoher Reflektivität direkt hergestellt werden, wobei sich in diesem Fall die anschließende Verspiegelung erübrigt. Allgemein eignet sich für diesen Teil des optischen Systems jedes optische Mittel, das eine parabolförmige Licht reflektierende Schicht aufweist und in der Lage ist, einen parallel einfallenden Strahl unabhängig von dessen lateraler Position genau in einen Brennpunkt A zu fokusieren. So kann die parabolförmige, reflektierende Schicht auch durch ein entsprechendes Gitter, eine entsprechende Beugungsstruktur, etc. realisiert werden.

Der Parabolspiegel 1 weist aufgrund seines Aufbaus eine optische Achse B auf, die eine Mittelachse des Parabolspiegels 1 ist, um die dieser rotationssymmetrisch herum aufgebaut ist. Auf der optischen Achse B liegt auch der Brennpunkt A des Parabolspiegels 1. Der Parabolspiegel 1 ist nunmehr so an seinem im allgemeinen geschlossenen Ende aufgeschnitten, daß er eine vordere erste Öffnung 2 aufweist, deren Öffnungsfläche senkrecht auf der optischen Achse B steht und die den Brennpunkt A enthält. Alle unter irgendeinem Winkel aus dem Halbraum in der Figur von rechts der Öffnung 2 stammenden Lichtstrahlen können nunmehr auf die reflektierende Innenfläche des Parabolspiegels 1 fallen und werden von dort in parallele Lichtstrahlen reflektiert. Falls es nicht erforderlich ist, den kompletten Halbraum der Öffnung 2 in parallele Lichtstrahlen abzubilden, so kann die Öffnung 2 weiter nach innen vom Brennpunkt A beabstandet angeordnet werden (in der Figur somit weiter links angeordnet).

Eine zweite hintere Öffnung 3 des Parabolspiegels 1 befindet sich auf der offenen Seite des Rotationsparaboloiden des Parabolspiegels 1. Diese Öffnung 3 weist eine Querschnittsfläche auf, die ebenfalls senkrecht auf der optischen Achse B des Parabolspiegel 1 steht. Der Abstand dieser Öffnungsfläche bezüglich des Brennpunkt A des Parabolspiegels 1 bemißt sich dabei nach dem auf den Parabolspiegel 1 auftreffenden Randstrahl C, der gerade so in den Brennpunkt A reflektiert wird, daß er noch nicht durch eine nachfolgend beschriebene Sammellinse 4 fällt.

Diese Sammellinse 4 ist derart innerhalb des Parabolspiegels 1 angeordnet, daß einerseits ihre optische Achse mit der optischen Achse B des Parabolspiegels 1 zusammenfällt und andererseits auch ihr Brennpunkt mit dem Brennpunkt A des Parabolspiegels 1 zusammenfällt. Diese Sammellinse 4 fokussiert die unter einem steileren Winkel als der Randstrahl C auf die zweite vordere Öffnung einfallenden Strahlen des Halbraumes ebenfalls in parallele Strahlen und deckt somit den gesamten Winkelbereich vom senkrecht auffallenden Strahl bis zu dem Winkel des Randstrahls C ab. Ihr Durchmesser ist dabei so bemessen, daß der Randstrahl C des Parabolspiegels 1 unter dem gleichen Winkel auf den Brennpunkt A fällt, wie ein entsprechender Randstrahl D der Sammellinse 4.

Insgesamt deckt der Parabolspiegel 1 also einen Winkelbereich der aus dem Halbraum rechts der Öffnung 2 stammenden Lichtstrahlen zwischen 90° (Lichtstrahlen, die direkt auf die Parabelspitze des Parabelstumpfes 1 auftreffen) und einem Randwinkel ab, der sich aus der Steigung der parabolförmigen, reflektierenden Oberfläche am Parabelrand unmittelbar an der zweiten Öffnung 3 bzw. aus dem Durchmesser der Sammellinse 4 ergibt. Den Winkelbereich zwischen 0° (d.h. senkrecht auf die vordere Öffnung 2 auffallender Lichtstrahl) bis zum Winkel des Randstrahls C deckt die Sammellinse 4 ab.

Oftmals ist es wünschenswert, daß die durch das optische System fallenden Strahlen, d.h. entweder die durch den Parabolspiegel 1 reflektierten Strahlen oder durch die von der Sammellinse 4 gebündelten Strahlen, die gleiche Laufzeit von der zweiten Öffnung 3 bis zur ersten Öffnung 2 bzw. dem Brennpunkt A benötigen. Hierzu kann der im wesentlichen massive Parabolspiegel 1 an seiner zweiten Öffnung 3 eine zylinderförmige Auskragung 5 aufweisen, die koaxial zur optischen Achse B des Parabolspiegels 1 ausgerichtet ist. Der Außendurchmesser dieser zylinderförmigen Auskragung 5 entspricht dabei dem Außendurchmesser der Sammellinse 4, so daß der Randstrahl D der Sammellinse 4 gerade noch durch die zylinderförmige Auskragung 5 geleitet wird. Selbstverständlich ist die Auskragung 5 transparent, wobei sie vorzugsweise aus dem gleichen Material wie der Parabelstumpf 1 gefertigt ist. Besonders bevorzugt können Auskragung 5 und Parabelstumpf 1 einstückig ausgebildet sein, d.h. daß die Auskragung 5 beispielsweise nachträglich aus dem Parabelstumpf 1 ausgedreht wird. Die Höhe dieser Auskragung 5 ist dabei so bemessen, daß das durch die Sammellinse 4 auf den Brennpunkt A fallende Licht die gleiche Zeit benötigt wie das von dem Parabolspiegel 1 in den Brennpunkt A reflektierte Licht. Hierzu ist es erforderlich den Brechungsindex des massiven Parabolspiegels und der Auskragung 5, die vorzugsweise gleich sind, zu kennen.

Gemäß einem bevorzugten Ausführungsbeispiel wird die Sammellinse 4 derart gefertigt, daß eine Durchgangsbohrung koaxial zur optischen Achse B in den Parabelstumpf 1 gebohrt wird, die sich also von der ersten Öffnung 2 bis zur zweiten Öffnung 3 erstreckt. Der Innendurchmesser dieser Durchgangsbohrung entspricht dem Außendurchmesser der Sammellinse 4. Von der Öffnungsseite der ersten Öffnung 2 wird nunmehr ein zylinderförmiger transparenter Stab in die Bohrung so eingeschoben, daß seine plane Außenseite bündig mit der Stumpffläche des Parabelstumpfes 1 abschließt. Sein anderes Ende ist zwecks Ausbildung der Sammellinse 4 als konkav gekrümmte Oberfläche ausgestaltet. Von der zweiten Öffnung 3 ist ebenfalls ein zylinderförmiger transparenter Stab in die Bohrung eingeschoben, dessen eines planes Ende an das konkav ausgestaltete Ende des ersten zylinderförmigen Stabes anstößt und dessen anderes planes Ende um die Höhe der Auskragung 5 aus der zweiten Öffnung 3 herausragt. Die Außendurchmesser beider zylinderförmiger Stäbe entsprechen dabei dem Innendurchmesser der Bohrung. Selbstverständlich kann das konkav ausgestaltete Ende auch an dem zweiten zylinderförmigen Stab vorgesehen sein, an dessen Ende, das sich im Inneren des Parabelstumpfes 1 befindet. In diesem Fall weist der erste zylinderförmige Stab zwei plane Enden auf. Wiederum ragt der zweite Stab soweit aus der zweiten Öffnung 3 heraus, daß die unterschiedlichen Wege zwischen dem Parabolspiegel 1 und der Sammellinse 4 ausgeglichen werden.

Der Parabolspiegel 1 kann insgesamt aus Schutzzwecken vor Zerkratzen der verspiegelten Außenfläche, etc. in einem Zylindermantel aufgenommen sein, dessen Leerräume anschließend ausgefüllt, insbesondere ausgeschäumt werden.

Das beschriebene optische System dient der Belichtung eines holographischen Filmes, der in einem (in der Figur nicht dargestellten) Filmträger aufgenommen werden kann, der vor der ersten Öffnung 2 angeordnet ist. Eine (ebenfalls in der Figur nicht dargestellte) LCD-Fläche ist an geeigneter Stelle in dem auf den Parabolspiegel 1 über die zweite Öffnung 3 auffallenden parallelen Lichtstrahl angeordnet und kann durch Steuern ihrer einzelnen Pixel bestimmte Lichtstrahlen des parallelen Lichtstrahles ein- oder ausblenden. Ein solches holographisches Belichtungsverfahren wird beispielsweise vorteilhaft bei dem bekannten DOT-Matrix-Verfahren eingesetzt. Hierbei wird der zu belichtende Hologrammfilm pixelweise belichtet, indem er zum Beispiel mittels des Filmträgers bezüglich des Brennpunktes A des optischen Systems in der Öffnungsfläche der ersten Öffnung 2 verschiebbar ist, so daß nacheinander jedes Pixel des Hologrammfilms im Brennpunkt A zu liegen kommt. Mit der LCD-Fläche kann nunmehr beispielsweise der für die Belichtung erforderliche Referenzstrahl als Mittelstrahl des parallelen Lichtstrahls entlang der optischen Achse B durchgelassen werden, während die in dem Pixel zu speichernde Information winkelabhängig durch Transparentschalten eines Pixels oder mehrerer zusammenhängender Pixel der LCD-Fläche belichtet wird. Somit können nacheinander die unterschiedlichen Belichtungswinkel von 90° über 0° bis 90°, also insgesamt ein Raumwinkel von 2π, eingestellt werden.

An der Stelle des Linsenrandes der Sammellinse 4 tritt ein Stetigkeitssprung im Winkelverlauf auf, da beispielsweise von dem Lichtstrahl D, der unter einem bestimmten Winkel auf den Brennpunkt A fällt, auf den Lichtstrahl C geschaltet werden muß, der im wesentlichen unter dem gleichen Winkel auf den Brennpunkt A fällt. Somit müssen zum Einstellen eines Winkelverlaufes von 0 bis 90° zuerst die um die optische Achse B angeordneten Pixel bis zu dem Lichtstrahl D transparent geschaltet werden, und anschließend in umgekehrter Richtung von dem Lichtstrahl C zurück bis zum Lichtstrahl D. Dies kann jedoch leicht über eine Steuereinrichtung kompensiert werden, die zum Steuern der LCD-Fläche eingesetzt wird. Diese Steuereinrichtung kann beispielsweise ein Korrekturmodul zum Korrigieren des Stetigkeitssprunges aufweisen. Der Vorteil bei diesem Belichtungsverfahren ist auch, daß die Polarisationsdrehung bezogen auf die großen Ablenkwinkel minimal ist, wodurch sich die Anforderungen an die Kohärenzlänge der für die Belichtung eingesetzten Lichtquelle ebenfalls auf ein Minimum beschränken.

Gemäß einer hierin nicht weiter beanspruchten Ausführungsform kann das optische System auch allgemein als Abbildungsoptik mit einem Öffnungswinkel von 2π verwendet werden. Die Anwendungsmöglichkeiten einer solchen Abbildungsoptik sind vielfältig. Wird beispielsweise ein erstes optisches System mit einem zweiten optischen System derart gekoppelt, daß die beiden ersten Öffnungen einander gegenüberstehen und das gekoppelte Gesamtsystem einen gemeinsamen optischen Brennpunkt A aufweist, so läßt sich mit den beiden auf die zweiten Öffnungen 3 der optischen Systeme einfallenden Lichtstrahlen eine Beleuchtung bzw. Bestrahlung eines im Brennpunkt A angeordneten Objektes über den gesamten Raumwinkelbereich einstellen. Dies kann beispielsweise für die Rekonstruktion eines beliebigen Objektes mittels Laserstrahls oder ähnlicher Lichtstrahlen verwendet werden. So sind bereits Verfahren bekannt, ein spezielles Material so zu belichten und weiterzubehandeln, daß anschließend ein dreidimensionales Objekt rekonstruiert werden kann.

Gemäß einer hierin nicht weiter beanspruchten Ausführungsform können zwei solche optischen System derart miteinander gekoppelt werden, daß sich ihre beiden zweiten Öffnungen 3 gegenüberstehen. Zwischen diese beiden Öffnungen 3 kann beispielsweise eine weitere Vergrößerungs- oder Verkleinerungsoptik angeordnet werden, wobei die beiden Parabolspiegel 1 nicht gleich groß sein müssen, sondern entsprechend der zwischengeschalteten Vergrößerungs- bzw. Verkleinerungsoptik an den jeweiligen von dort stammenden parallelen Lichtstrahl größenmäßig angepaßt sind. Dieses zusammengesetzte optische System eignet sich für die dreidimensionale Vergrößerung, beispielsweise in der Mikroskopie, aber auch bei der Himmelsbeobachtung, etc.

Insbesondere auf dem Gebiet der konfokalen Mikroskopie kann durch die Verwendung dieses zusammengesetzten Parabolmoduls das Auflösungsvermögen gegenüber herkömmlichen Objektiven beträchtlich gesteigert werden, da sowohl die laterale als auch die axiale Auflösung in hohem Maße von der Apertur abhängt.

Einen großen Vorteil bietet das optische System auch im Bereich der holographischen Datenspeicherung. So läßt sich nämlich die Informationsdichte gegenüber gewöhnlichen Sammeloptiken beträchtlich steigern, da Strahlen aus dem Winkelbereich des gesamten Halbraums zur Interferenz gebracht werden können.

Gemäß einer hierin nicht weiter beanspruchten Ausführungsform können zwei optische Systeme über ihre zweiten Öffnungen 3 mittels eines Rohres derart miteinander verbunden werden, daß insgesamt ein optisches Instrument entsteht, das eine Rundumabbildung nach Art eines Froschauges gestattet und diese Rundumabbildung über eine beliebige Distanz überträgt. Anstelle des Rohres kann auch ein biegsamer Lichtwellenleiter zwischengeschaltet werden, wodurch die beiden ersten Öffnungen 2 der beiden optischen Systeme an verschiedene Positionen angeordnet werden können. Ein solches optisches System kann beispielsweise als Türspion, oder in miniaturisierter Form als Endoskop eingesetzt werden. Der Stetigkeitssprung im Winkelverlauf der Lichtstrahlen wird hierbei direkt auf optischem Wege ausgeglichen.

## Patentansprüche

1. Optisches System zum Belichten eines Hologrammfilms, mit:
a) einer Sammellinse (4),
b) einer LCD-Fläche, auf die ein paralleler Lichtstrahl einfällt, und
c) einem Filmträger zum Aufnehmen eines zu belichtenden Hologrammfilms,
**gekennzeichnet durch**
d) einen Reflektor (1) mit einer parabolförmigen reflektierenden Oberfläche, dessen optische Achse B und dessen Brennpunkt (A) mit der optischen Achse bzw. dem Brennpunkt der Sammellinse (4) zusammenfallen,
e) wobei die Sammellinse und der Reflektor derart ausgestaltet sind, daß die beiden Randstrahlen (C, D) von Reflektor und Sammellinse jeweils unter im wesentlichen dem gleichen Winkel **durch** den Brennpunkt (A) des Reflektors gehen,
f) der Reflektor eine vor dem Filmträger angeordnete erste Öffnung umfaßt, aus der der auf die LCD-Fläche einfallende parallele Lichtstrahl als ein sich in alle Richtungen eines Halbraumes ausbreitender Lichtstrahl austritt und deren Öffnungsfläche die Schnittfläche einer Ebene **durch** den Reflektor (1) ist, die senkrecht auf der optischen Achse (B) des Reflektors steht und den Brennpunkt (A) enthält, und
g) der Reflektor (1) eine zweite Öffnung (3) für den von der LCD-Fläche durchgelassenen parallelen Lichtstrahl umfaßt, deren Öffnungsfläche eine Ebene **durch** den Reflektor (1) ist, die senkrecht auf der optischen Achse (B) des Reflektors (1) steht und den Auftreffpunkt des genannten Reflektor-Randstrahls (C) auf den Reflektor (1) enthält.

2. Optisches System nach Anspruch 1, bei welchem der Reflektor (1) als massiver Parabelstumpf mit verspiegelter Parabol-Außenfläche ausgestaltet ist.

3. Optisches System nach Anspruch 2, bei welchem der Parabelstumpf (1) an seiner die zweite Öffnungsfläche bildenden Außenfläche eine zylinderförmige Auskragung (5) aufweist, die koaxial zur optischen Achse (B) des Reflektors (1) angeordnet ist, deren Außendurchmesser dem Außendurchmesser der Sammellinse (4) entspricht und deren Höhe so bemessen ist, daß die beiden Randstrahlen (C,D) von Reflektor (1) und Sammellinse (4) die gleiche Laufzeit zum Brennpunkt (A) des Reflektors (1) haben.

4. Optisches System nach Anspruch 2 oder 3, bei welchem der Parabelstumpf (1) eine Durchgangsbohrung aufweist, die sich von der ersten (2) bis zur zweiten Öffnung (3) erstreckt und koaxial zu seiner optischen Achse (B) angeordnet ist.

5. Optisches System nach Anspruch 4, bei welchem ein erster Vollzylinder in der Bohrung aufgenommen ist, dessen eines Ende bündig mit einer der beiden planen Flächen des Parabelstumpfes (1) abschließt und dessen anderes Ende zwecks Ausbildung der Sammellinse (4) als konkav gekrümmte Oberfläche ausgestaltet ist.

6. Optisches System nach Anspruch 5, bei welchem ein zweiter Vollzylinder in der Bohrung aufgenommen ist, dessen eines Ende an das konkav ausgestaltete Ende des ersten Vollzylinders anstößt.

7. Optisches System nach Anspruch 5, bei welchem das andere Ende des zweiten Vollzylinders um die Höhe der Auskragung (5) aus der Durchgangsbohrung herausragt.

8. Optisches System nach einem der Ansprüche 5 bis 7, bei welchem die Außendurchmesser des ersten und des zweiten Vollzylinders jeweils dem Innendurchmesser der Bohrung entsprechen.

9. Optisches System nach einem der Ansprüche 2 bis 8, bei welchem der Parabelstumpf (1) und/oder die beiden Vollzylinder aus Acryl gefertigt sind.

10. Optisches System nach einem der vorhergehenden Ansprüche, bei welchem der Reflektor in einem Zylindermantel aufgenommen ist, in dem die Leerräume ausgefüllt, insbesondere ausgeschäumt sind.

11. Optisches System nach einem der vorhergehenden Ansprüche, bei welchem eine Steuereinrichtung zum Steuern der LCD-Fläche vorgesehen ist, welche ein Korrekturmodul zum Korrigieren des Stetigkeitssprungs im Winkelverlauf bei den beiden Randstrahlen (C,D) aufweist.

12. Optisches System nach einem der vorhergehenden Ansprüche, welches mit einem zweiten optischen System derart gekoppelt ist, daß die beiden ersten Öffnungen (2) zusammenfallen und das gekoppelte Gesamtsystem einen gemeinsamen optischen Brennpunkt (A) aufweist, wobei ein Filmträger zum Aufnehmen eines zu belichtenden Hologrammfilms im gemeinsamen Brennpunkt (A) beider optischer Systeme vorgesehen ist.

## Claims

1. An optical system for the exposure of a hologram film, having:
a) a converging lens (4),
b) b) an LCD surface onto which a parallel light beam falls, and
c) a film carrier for recording a hologram film to be exposed,
**characterised by**
d) a reflector (1) having a parabolic reflective surface, the optical axis B and the focal point (A) of which coincide with the optical axis and the focal point of the converging lens (4),
e) wherein the converging lens and the reflector are configured in such a manner that the two marginal beams (C, D) of reflector and converging lens pass through the focal point (A) of the reflector at substantially the same angle,
f) the reflector comprises an aperture disposed in front of the film carrier from which the parallel light beam falling onto the LCD surface emerges as a light beam propagating in all directions of a half-space and the aperture surface of which is the cutting plane of a plane by the reflector (1), which is perpendicular to the optical axis (B) of the reflector and contains the focal point (A), and
g) the reflector (1) comprises a second aperture (3) for the parallel light beam transmitted by the LCD surface, the aperture surface of which is a plane through the reflector (1) which is perpendicular to the optical axis (B) of the reflector (1) and contains the point of impact of the mentioned reflector marginal beam (C) on the reflector (1).

2. An optical system according to Claim 1, in which the reflector (1) is configured as a solid parabolic frustum with a metallised parabolic outer surface.

3. An optical system according to Claim 2, in which the parabolic frustum (1) at its outer surface forming the second aperture surface comprises a cylindrical projection (5), which is disposed coaxially to the optical axis (B) of the reflector (1), the external diameter of which corresponds to the external diameter of the converging lens (4) and the height of which is dimensioned so that the two boundary beams (C, D) of reflector (1) and converging lens (4) have the same propagating time to the focal point (A) of the reflector (1).

4. An optical system according to Claim 2 or 3, in which the parabolic frustum (1) comprises a through-hole which extends from the first (2) to the second aperture (3) and is disposed coaxially to its optical axis (B).

5. An optical system according to Claim 4, in which a first solid cylinder is housed in the bore, the one end of which ends flush with one of the two plane surfaces of the parabolic frustum (1) and the other end of which is configured as a concavely curved surface for the purpose of constructing the converging lens (4).

6. An optical system according to Claim 4, in which a second solid cylinder is housed in the bore, the one end of which is adjacent to the concavely configured end of the first solid cylinder.

7. An optical system according to Claim 5, in which the other end of the second solid cylinder protrudes out of the through-bore by the height of the projection (5).

8. An optical system according to one of Claims 5 to 7, in which the external diameters of the first and the second solid cylinders in each case correspond to the internal diameter of the bore.

9. An optical system according to one of Claims 2 to 8, in which the parabolic frustum (1) and/or the two solid cylinders are produced from acryl.

10. An optical system according to one of the preceding Claims, in which the reflector is housed in a cylinder casing in which the spaces are filled, in particular foamed.

11. An optical system according to one of the preceding Claims, in which a control mechanism for controlling the LCD surface is provided, which comprises a correction module for correcting the continuity jump in the angular path at the two marginal beams (C, D).

12. An optical system according to one of the preceding Claims, which is coupled with a second optical system in such a manner that the two first apertures (2) coincide and the coupled overall system comprises a common optical focal point (A), wherein a film carrier is provided for recording a hologram film to be exposed in the common focal point (A) of both optical systems.

## Revendications

1. Système optique pour l'exposition d'un film holographique, comprenant
a) une lentille convergente (4),
b) une surface d'affichage à cristaux liquides, sur laquelle est incident un rayon lumineux parallèle, et
c) un support pour film pour recevoir un film holographique à exposer,
**caractérisé par**
d) un réflecteur (1) comprenant une surface réfléchissante parabolique, l'axe optique (B) duquel et le foyer (A) duquel coïncident avec l'axe optique respectivement le foyer de la lentille convergente (4),
e) la lentille convergente et le réflecteur aménagés de telle manière que les deux rayons marginaux (C, D) provenant du réflecteur et de la lentille convergente passent chacun à travers le foyer (A) du réflecteur essentiellement sous le même angle,
f) le réflecteur comprend une première ouverture aménagée devant le support pour film, depuis laquelle le rayon lumineux parallèle frappant la surface d'affichage à cristaux liquides sort comme un rayon lumineux se propageant dans toutes les directions d'un espace semi-infini et la surface d'ouverture de laquelle est la surface de coupe d'un plan passant par le réflecteur (1), qui se situe verticalement sur l'axe optique (B) du réflecteur et contient le foyer (A), et
g) le réflecteur (1) comprend une deuxième ouverture pour le rayon lumineux parallèle qu'a laissée passer la surface d'affichage à cristaux liquides, la surface d'ouverture de laquelle est un plan passant par le réflecteur (1), qui se situe verticalement sur l'axe optique (B) du réflecteur (1) et contient le point d'incidence dudit rayon marginal (C) de réflecteur sur le réflecteur (1).

2. Système optique selon la revendication 1, dans lequel le réflecteur (1) est aménagé comme une parabole tronquée massive comprenant une surface extérieure parabolique, pourvue d'une couche réfléchissante.

3. Système optique selon la revendication 2, dans lequel la parabole tronquée (1) présente, sur sa face extérieure formant la deuxième surface d'ouverture, une saillie (5) cylindrique qui est aménagée de manière coaxiale à l'axe optique (B) du réflecteur (1), le diamètre extérieur de laquelle correspond au diamètre extérieur de la lentille convergente (4) et la hauteur de laquelle est dimensionnée de manière que les deux rayons marginaux (C, D) du réflecteur (1) et de la lentille convergente (4) aient le même temps de propagation jusqu'au foyer (A) du réflecteur (1).

4. Système optique selon la revendication 2 ou 3, dans lequel la parabole tronquée (1) présente un trou traversant, qui s'étend depuis la première (2) jusqu'à la deuxième ouverture (3) et est aménagé de manière coaxiale à son axe optique (B).

5. Système optique selon la revendication 4, dans lequel un premier cylindre plein est logé dans le trou, une première extrémité duquel se termine au même niveau que l'une des deux faces planes de la parabole tronquée (1) et l'autre extrémité duquel est aménagée comme une surface courbée de manière convexe, en vue du façonnement de la lentille convergente (4).

6. Système optique selon la revendication 5, dans lequel un deuxième cylindre plein est logé dans le trou, une extrémité de laquelle aboute l'extrémité du premier cylindre plein aménagée de manière concave.

7. Système optique selon la revendication 5, dans lequel l'autre extrémité du deuxième cylindre plein fait saillie, depuis le trou traversant, de la hauteur de la saillie (5).

8. Système optique selon une quelconque des revendications 5 à 7, dans lequel les diamètres extérieurs du premier et du deuxième cylindre plein correspondent chacun au diamètre intérieur du trou.

9. Système optique selon une quelconque des revendications 2 à 8, dans lequel la parabole tronquée (1) et / ou les deux cylindres pleins sont fabriqués en acrylique.

10. Système optique selon une quelconque des revendications précédentes, dans lequel le réflecteur est logé dans un corps de cylindre, dans lequel les espaces vides sont remplis, en particulier garnis de mousse.

11. Système optique selon une quelconque des revendications précédentes, dans lequel un dispositif de commande est prévu pour la commande de la surface d'affichage à cristaux liquides, lequel présente un module de correction pour la correction du saut de continuité dans la courbe angulaire pour les deux rayons marginaux (C, D).

12. Système optique selon une quelconque des revendications précédentes, qui est couplé à un deuxième système optique de telle manière que les deux premières ouvertures (2) coïncident et que le système global couplé présente un foyer optique (A) commun, un support pour film pour recevoir un film holographique à exposer étant prévu dans le foyer (A) commun des deux systèmes optiques.
